# EUROPEAN PATENT SPECIFICATION

(11) **EP 0 631 223 B1**
(45) Date of publication and mention of the grant of the patent: **06.09.2000**
(21) Application number: 94201607.2
(22) Date of filing: 07.06.1994
(51) Int. Cl.: G06F 3/023, G06F 3/033

(54) **Speed adaptive positioning of cursor in CD-I**
Geschwindigkeitsangepasste Schreibmarkenpositionierung für CD-I
Adaptation de la vitesse de positionnement du curseur dans un dispositif à CD-I

(30) Priority: 14.06.1993 EP 93201701
(43) Date of publication of application: 28.12.1994
(73) Proprietor: Koninklijke Philips Electronics N.V., 5621 BA Eindhoven (NL)
(72) Inventor: Sombroek, Renate Maria, c/o Int.Octrooibureau B.V., NL-5656 AA Eindhoven (NL); Gerlings, Jan Derk, c/o Int.Octrooibureau B.V., NL-5656 AA Eindhoven (NL)
(74) Representative: Faessen, Louis Marie Hubertus

(56) References cited:
- EP-A- 0 062 133
- EP-A- 0 479 233
- US-A- 4 209 842
- IBM TECHNICAL DISCLOSURE BULLETIN., vol.21, no.3, August 1978, NEW YORK US pages 1184 - 1186 BENNETT ET AL. 'Cursor movement control circuitry'
- PATENT ABSTRACTS OF JAPAN vol. 7, no. 18 (P-170) (1163) 25 January 1983 & JP-A-57 174 729 (NISSAN JIDOSHA K.K.) 27 October 1982
- IBM TECHNICAL DISCLOSURE BULLETIN., vol.26, no.2, July 1983, NEW YORK US pages 467 - 470 MURPHY 'Increasing spatial method for accelerating keystroke action'
- IBM TECHNICAL DISCLOSURE BULLETIN., vol.26, no.2, July 1983, NEW YORK US pages 473 - 476 HAWES ET AL. 'Smooth travel of crosshair cursor on display screen'

## Description

### FIELD OF THE INVENTION

The invention relates to a data processing system comprising a display, a cursor control means connected to the display for displacement of a cursor represented on the display; and a user-interface means being coupled to the cursor control means for user-manipulation of the cursor via the cursor control means. In particular, the invention relates to a CD-I system.

### BACKGROUND ART

Systems as mentioned in the preamble, among which CD-I systems in particular, are widely known. With the advent of CD-I there has been created a considerably user-friendly medium, which enables interactive handling of information in an ergonomic manner. CD-I systems are particularly, but not exclusively, designed for consumer applications in domestic environments. CD-I applications, e.g., software on compact disc information carriers, are available in a large variety of titles, ranging from video games and reference books to teaching and training applications. User-interface aspects are considered among the key issues that govern the wide acceptance of CD-I. For further information on technical issues, see "Compact Disc-Interactive; A Designer's Overview", Kluwer, Nov. 1988, ISBN 9020121219.

In many program applications, user-interaction with the data processing system is achieved through cursor control. A cursor is a figure, which is displayed on the display screen and whose position can be changed relative to the screen by the user manipulating the user-interface means, e.g., a manoeuvring device. The user moves the cursor across the screen as in a video game, or positions the cursor in a particular area shown on the screen, e.g., to select a particular program option as in a menu. The user-interface means may be provided with a manoeuvring functionality such as, for example, a plurality of buttons, each for control of the cursor movement in a particular direction, a joy-stick, or a single thumb-controlled button for selective multiple-direction control of the cursor.

### OBJECT OF THE INVENTION

The inventors have found that in conventional systems the cursor speed within a single application is some sort of a compromise, i.e., either it is too low for rapidly transferring the cursor over large distances, leading to a tedious behaviour of the system, or too high for accurate positioning, resulting in a rather difficult manipulation of the cursor homing-in on a chosen target.

It is an object of the invention to provide a data processing system of the kind cited in the preamble, in particular a CD-I system, whose cursor positioning control is more user-friendly and whose cursor control means are simply implemented.

### SUMMARY OF THE INVENTION

To this end, the invention provides a data processing system being comprised of a display; a cursor control means connected to the display for displacement of a cursor represented on the display; and a user-interface means being coupled to the cursor control means for user-manipulation of the cursor via the cursor control means. In accordance with the invention, the user-interface means comprise user-operable means for varying the speed of said displacement within a speed range which is limited by an upper speed limit, and the cursor control means is operative to set the upper speed limit at a relatively low speed relative to the display during a predetermined time interval upon activation of the user-interface and set the upper speed limit at a relatively high speed after the predetermined time interval has elapsed.

The invention is based on the insight that quick and accurate positioning of the cursor is attained in a simple and ergonomic manner by a relatively high-speed approach of the destination area for the cursor. This is achieved by providing the user with an expanded speed range after the predetermined time interval, which allows, in response to the user manipulating the user-interface, a higher speed of cursor-displacement while still allowing slow and accurate positioning once the destination area is reached.

The user-interface means may be operative to control the cursor control means by transmitting data effecting the relatively low speed to the cursor control means during the predetermined time interval, and by transmitting data effecting the relatively high speed to the cursor control means after the predetermined time interval has elapsed. Alternatively, the cursor control means may be provided with timer means to keep record of the time elapsed for deciding when to change the speed.

Generally, data transmission from the user-interface to the cursor control means involves a temporal basis in terms of repetitive events, called cycles hereinafter. For example, the data processing system may comprise a system clock providing a time basis in terms of clock cycles of fixed length. Alternatively, the aforesaid data transmission may be governed by a protocol whose temporal basis is the repetition of operation cycles, such as cursor position updates. Preferably, the cursor control means is operative to measure the predetermined time interval in terms of a number of the events or cycles. The cursor control means is preferably provided with resettable counting means to count the number of events or cycles elapsed since the user-interface was last activated in order to define the moment of transition from the low-speed domain to the high-speed domain. The counter is reset before another activation of the user-interface occurs.

Typically, each respective one of the repetitive events in a CD-I system involves a transfer of information indicative of an update of a cursor position. In a CD-I system, the data communication between the user-interface and the CD-I player is pre-specified in the RS232-C protocol. The interface typically uses a transmission rate of 1200 baud and 3 bytes per update of the cursor position. Each byte sent to the CD-I player typically has 7 data bits, one start bit and 2 stop bits. Accordingly, the maximum number of pixels that the cursor can traverse per second is 40 times the number of pixels specified per single transmission, and each transmission requires 25 msec. This protocol furnishes a time base governing the interaction rate between the CD-I player and the cursor control means. A predetermined number of transmissions provides a simple standard against which the cursor activation time is measured to determine the predetermined time interval in terms of the number of transmissions.

It is to be noted that IBM Technical Disclosure Bulletin vol. 21, no. 3, August 1978, pages 1184-1186 discloses a data processing system with display and cursor control, having a cursor control means operative to displace the cursor at a relatively low speed during a predetermined time interval upon activation and to displace the cursor at relatively high speed after the predetermined time interval has elapsed. This system has the disadvantage that it applies two fixed speeds, which makes it hard to position the cursor accurately once the destination area is reached. The user has to release the user-interface and thereupon activate the user-interface again to start the predetermined time interval during which the cursor is displaced with a relatively low speed. Similar approaches are disclosed in the following documents:
- Patents abstracts of Japan vol. 7, no 18 (P-179) [1163], 25.01.1983 corresponding to JP 57 174 729 A
- IBM Technical Disclosure Bulletin vol. 26, no. 2, July 1983, pages 467-470
- EP 0 062 133 A
- IBM Technical Disclosure Bulletin vol. 26, no. 2, July 1983, pages 473-476
- US 4 209 842 A.

### BRIEF DESCRIPTION OF THE DRAWING

The invention is explained below by way of example and with reference to the accompanying drawing, wherein:
Fig. 1 gives a diagram of the system functionalities in the invention;
Fig. 2 gives a diagram of cursor speed versus time;
Fig. 3 gives a functional diagram of the user-interface means; and
Fig. 4 gives an embodiment of the user-interface.

Throughout the figures, same reference numerals indicate identical or corresponding components.

### DETAILED EMBODIMENTS

### System

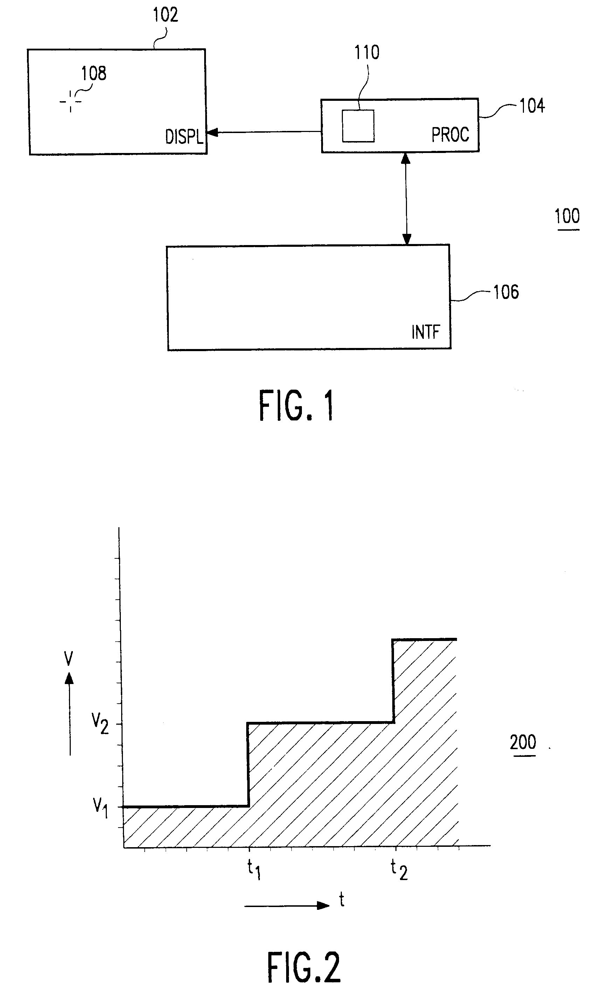

Fig. 1 gives a diagram of a data processing system 100 in the invention. System 100 is functionally comprised of a display 102, a data processing apparatus 104 being operative to generate video or graphics data and being coupled to display 102, and a user-interface means 106 coupled to apparatus 104. User-interface means 106 controls the movement of a cursor 108 on display 102 through a cursor control means 110. Cursor control means 110 here is included in apparatus 104. For example, display 102 is a monitor, apparatus 104 is a CD-I player, and user-interface means 106 is a manually operable data input device, functionally operating as a manoeuvring device, e.g., a joy stick. The term "cursor" is meant to comprise any figure shown on the display and to be selectively positioned in a particular area of the display under user-control. Cursor control means 110 usually is dedicated software.

Manual operation of user-interface means 106 generates signals for transmission to cursor control means 110 that thereupon causes cursor 108 to move accordingly. Cursor control means 110 may repetitively interrogate user-interface means 106 to determine the status of the latter for thereupon carrying out the corresponding displacement of cursor 108. Alternatively, user-interface means 106 may directly supervise cursor control means 110 to affect the position of cursor 108.

As explained above, a well adjusted cursor speed is one of the features that renders system 100 user-friendly. Too low a speed of cursor 108 is likely to be found boring, whereas too high a speed will cause overshoots while trying to position cursor 110 at desired location. The invention therefore provides cursor control means 110 with automatic dynamic speed adaptivity. This is explained with reference to Fig. 2.

### Speed diagram

Fig. 2 shows a diagram 200 to explain quantitatively the cursor speed control. Time t is drawn horizontally in, e.g., operation cycles or clock cycles, speed v is drawn in, e.g., pixels/sec. According to the invention, cursor 108 moves at a relatively low speed lower than or equal to v1 during a first time period of duration t1 that starts when user-interface 106 is activated. When the first time period has elapsed, cursor 108 is enabled to move at a relatively high speed lower than or equal to v2, being significantly higher than v1. If desired, the speed of cursor 108 is increased again after a time t2 during which cursor 108 was kept moving at the relatively high speed.

In CD-I systems, a screen of display 102 typically has 720x480 pixels (NTSC mode) or 768x560 pixels (PAL mode). A maximum cursor speed at which cursor 108 is still controllable typically is 400 pixels per second. Slow speed v1 may be in the order of 10 pixels per second. Speed levels v1, v2 and v3.

As mentioned above, the RS232-C protocol typically uses a transmission rate of 1200 baud and 3 bytes per update of the cursor position. Each byte sent to the CD-I player typically has 7 data bits, one start bit and 2 stop bits. Accordingly, the maximum number of pixels that the cursor can traverse per second is 40 times the number of pixels specified per single transmission, and each transmission requires 25 msec. Experiments have shown that a value of time interval t1 in the order of 0,2 seconds is acceptable when the cursor is displaced by one pixel per transmission, i.e., six to eight successive transmissions suffice in practice to accurately position the cursor. Note that the optimum values for speed v1 and time t1 may depend on the individual application run on the CD-I system.

Accurate positioning of cursor 108 now is accomplished in a fairly simple way without being hindered by a too high cursor speed, whereas large distances can be traversed fairly rapidly, all within the same application. In case cursor 108 is to be displaced over a short distance around display 102, low speed v1 and time t1 will do perfectly well to position cursor 108 precisely as desired. In case cursor 108 has to travel a long distance, it will do so initially at a low speed v1 for a time period of duration t1. However, as soon as a time period of t1 has elapsed, the cursor speed is increased to v2 to rapidly traverse a long distance. When approaching the desired position, cursor 108 is to be disabled for just a moment, e.g., by letting loose user-interface 106. Re-activating user-interface 106 then causes cursor 108 to start moving at a low speed v1 again, which is adequate for accurate positioning. When necessary, disabling and subsequent reactivating can be repeated.

The cursor speed may be fixed at values v1 and v2. Alternatively, v1 and v2 may be the upper bounds of low-speed and high-speed ranges, the cursor speed being continuously variable through user-interface 106.

The optimum combinations of speeds v1 and v2 (and v3 and etc.) together with time periods t1 (and t2 and etc.) may depend on the application run on system 100. Some applications such as games require a rapid and highly accurate positioning of cursor 108, whereas other applications, such as carrying out a selection through menus, do not need a very precise positioning. Accordingly, cursor speed preferably is made programmable, with regard to magnitude or duration or both. This could be attained by switches or dials to be set by the user. As another option, a special speed selection program could be run on system 100 to let the user select preferred speeds v1 or v2, e.g.,through a menu. Alternatively, cursor speeds could be made to vary automatically under system control depending on the application run on system 100.

### User-interface functionalities

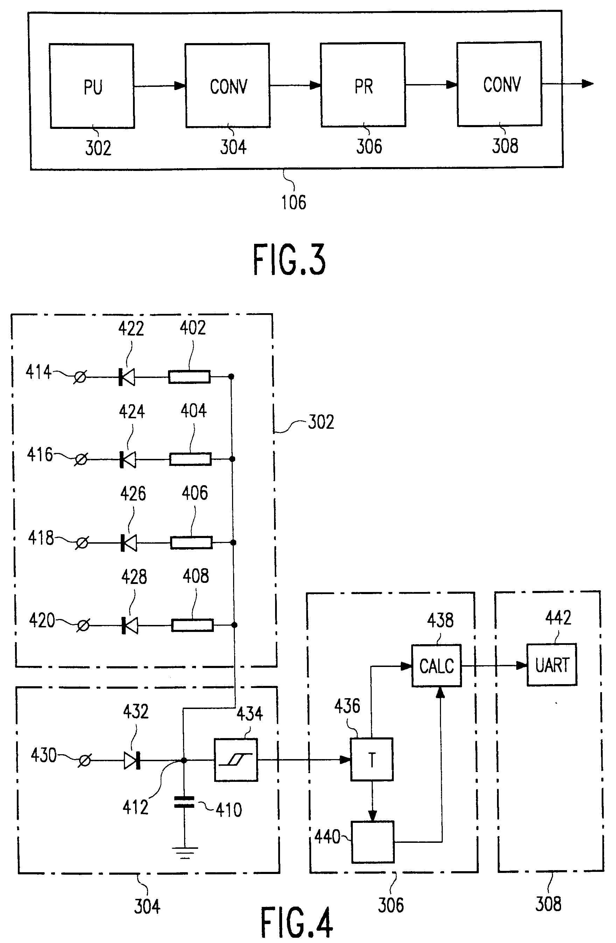

Fig. 3 gives a diagram to explain the successive operations for cursor control to be carried out in the signal path from user-interface 106 to cursor control means 110. Fig. 3 shows user-interface 106 composed of a pick-up means 302; a converter 304 coupled to an output of pick-up means 302; a processor 306 coupled to an output of converter 304; and a converter 308 coupled to an output of processor 306. Pick-up means 302 is operative to sense the manipulation by the user and to provide corresponding output signals. Converter 304 is operative to convert the output signals from pick-up means 302 into appropriately formatted input signals to processor 306. Processor 306 is operative to interpret the output signals from pick-up means 302 as indicative of the desired direction of displacement of cursor 108. Converter 308 is optional and is meant to convert the output signals of processor 306 into an appropriate format accepted by apparatus 104. Converter 308 can also be functionally integrated with processor 306.

### User-interface embodiment

Fig. 4 shows an example of an embodiment of user-interface means 106. Pick-up means 302 is comprised of force sensing resistors 402, 404, 406 and 408 for control of the movement of cursor 108 to the left, to the right, up and down, respectively. A force sensing resistor is, for example, a polymer thick film resistor such as FSR of Interlink. Such a resistor has a resistance that decreases with increasing pressure applied to the film. Typically, the resistance value is inversely proportional to the applied force in the range between 15 gram to 10 kg and swings about 100 kΩ.

The actual resistance values of resistors 402-408 are to be converted into digital data. This can be achieved in a variety of manners, e.g., by way of an A/D conversion, by way of an oscillator or a VCO of which the resistor is a functional part and digitally measuring the frequency or the VCO's control signal, or via an RC-arrangement to measure the varying charging or discharging time of the capacitor C through a counting circuit. The RC option turns out to be a cheap and simple solution and is implemented as follows.

Resistors 402, 404, 406 and 408 all are connected to a capacitor 410 via a node 412. Resistors 402, 404, 406 and 408 are individually coupled to control inputs 414, 416, 418 and 420, respectively, via diodes 422, 424, 426 and 428, respectively. Node 412 is further coupled to a charge control input 430 via a diode 432. Setting control inputs 414, 416, 418, 420 and 430 at 5 volt, e.g. through processor 306, causes capacitor 410 to be charged. Setting control inputs 416, 418 and 420 at 5 volts and control inputs 414 and 430 at 0 volt, e.g., through processor 306, causes capacitor 410 to be discharged via resistor 402. The voltage level at node 412 decreases exponentially with characteristic RC time, R being the instant resistance of resistor 402, C being the capacitance of capacitor 410. Node 412 is connected to a Schmitt trigger 434 that provides an output signal of well defined voltage level, and also functions as a buffer with small input impedance so as not to affect the voltage at node 412 too severely. Schmitt trigger 434 supplies its output signal to a timer 436 in processor 306. Timer 436 stops counting when Schmitt trigger 434 switches over due to the voltage at node 412 being dropped below a particular level. The contents of timer 436 then is representative of the resistance value of resistor 402 and, therefore, of the force experienced by resistor 402.

This timer contents now can be translated by a calculation means 438 of processor 306 into a quantity associated with a magnitude of the speed of cursor 108 in the direction associated with resistor 402, which is to the left. Consecutively interrogating resistors 402-408 generates consecutive timer contents that are combined in calculation means 438 to produce a particular speed and a particular direction. For example, the difference between the up and down related timer contents corresponds to a vertical component of the cursor speed, whereas the difference between the left and right related timer contents corresponds to the horizontal component of the cursor speed. These components then can be combined to generate a proper velocity vector on a pixel grid of display 102 in a conventional manner. Calculation means 438 could be implemented, for example, by a simple look-up table.

Typically, the maximum voltage at node 412 is 4,3 volt as the voltage drop across diodes 422-428 is 0,7 volt. Schmitt trigger 434 has a typical switch-over point of 0,8 volt. Typically, the maximum time allowed to discharge is 300 µsec, and the minimum time is 1 µsec. The capacitance of capacitor 410 is typically 2,2 µf.

Cursor speed range control as proposed in the invention is accomplished as follows. In a first step, the resistance values of resistors 402-408 are measured as specified above while user-interface 106 is manipulated. In a next, second step, these measured resistance values are reduced in processor 306 to cursor displacement quantities in the appropriate format accepted by apparatus 104. In a next, third step, the displacement quantities are transmitted to apparatus 104. These steps are normally cyclically repeated while user-interface 106 is kept actuated. Processor 306 is provided with a counter 440 to register up to a pre-specified number of aforesaid first steps that were carried out since user-interface 106 was last actuated. Before counter 440 reaches the pre-specified number, calculation means 438 is made to furnish low-speed data. When counter 440 has counted the pre-specified number, calculation means 438 is controlled to provide high-speed data.

User-interface means 106 is provided with a Universal Asynchronous Receiver and Transmitter 442 (UART) for serial RS232 communication of the data pertaining to cursor speed and direction, mentioned above as the accepted protocol in CD-I. Alternatively, processor 306 may have an UART 442 aboard such as the 8051-based 8-bit microcontrollers of Philips.

## Claims

1. A data processing system being comprised of:
- a display (102);
- a cursor control means (110) connected to the display for displacement of a cursor represented on the display;
- a user-interface means (106) being coupled to the cursor control means for user-manipulation of the cursor via the cursor control means;
characterized in that
- the user-interface means comprise user-operable means (402, 404, 406, 408) for varying the speed of said displacement within a speed range which is limited by an upper speed (v1, v2) limit,
- the cursor control means is operative to set the upper speed limit at a relatively low speed relative to the display during a predetermined time interval (t1, t2) upon activation of the user-interface and set the upper speed limit at a relatively high speed after the predetermined time interval has elapsed.

2. The system of claim 1, wherein the user-interface means (106) is operative to control the cursor control means (110) by transmitting data effecting the relatively low speed (v1) to the cursor control means during the predetermined time interval (t1), and by transmitting data effecting the relatively high speed (v2) to the cursor control means after the predetermined time interval has elapsed.

3. The system of claim 1, wherein data transmission from the user-interface (106) to the cursor control means (110) involves a temporal basis in terms of repetitive events, and wherein the cursor control means or the user-interface is operative to measure the predetermined time interval in terms of a number of the events.

4. The system of claim 3, wherein a respective one of the repetitive events involves a respective update of a cursor position, and wherein the relatively low speed is effected by a relatively short displacement of the cursor per update, and wherein the relatively high speed is effected by a relatively large displacement of the cursor per update.

5. The system of claim 1, wherein the user-interface means (106) is operative to render at least the relatively low speed (v1) or the relatively high speed (v2) variable in response to the user manipulating the user-interface.

6. The system of claim 3, wherein the cursor control means (110) or the user-interface means (106) is provided with a resettable counting means (440) to count the number of events elapsed since the user-interface was last activated.

7. The system of claim 1 or 3, comprising a CD-I system.

8. A user-interface means adapted for use in the system of claim 2, 5 or 6.

## Patentansprüche

1. Datenverarbeitungssystem, das aus den nachfolgenden Elementen besteht:
- einer Wiedergabeanordnung (102);
- einem Cursorsteuermittel (110), das mit der Wiedergabeanordnung verbunden ist zum Verlagern eines an der Wiedergabeanordnung dargestellten Cursors;
- einem Benutzerschnittstellenmittel (106), das mit dem Cursorsteuermittel gekoppelt ist zur Manipulation des Cursors über das Cursorsteuermittel durch den Benutzter;
dadurch gekennzeichnet, dass
- das Benutzerschnittstellenmittel durch den Benutzer zu betätigende Mittel (402, 404, 406, 408) aufweist zum Variieren der Geschwindigkeit der genannten Verlagerung innerhalb eines Geschwindigkeitsbereichs, der durch eine obere Geschwindigkeitsgrenze (v1, v2) begrenzt ist,
- das Cursorsteuermittel wirksam ist um die obere Geschwindigkeitsgrenze gegenüber der Wiedergabeanordnung während eines vorbestimmten Zeitintervalls (t1, t2) bei Aktivierung der Benutzerschnittstelle auf eine relativ niedrige Geschwindigkeit einzustellen und die obere Geschwindigkeitsgrenze auf eine relativ hohe Geschwindigkeit einzustellen, nachdem das vorbestimmte Zeitintervall beendet ist.

2. System nach Anspruch 1, wobei das Benutzerschnittstellenmittel (106) das Cursorsteuermittel (110) steuert durch Zuführung von Daten, welche die relativ niedrige Geschwindigkeit (v1) beeinflussen, zu dem Cursorsteuermittel während eines vorbestimmten Zeitintervalls (t1) und durch Zuführung von Daten, welche die relativ hohe Geschwindigkeit (v2) beeinflussen, zu dem Cursorsteuermittel nachdem das vorbestimmte Zeitintervall beendet ist.

3. System nach Anspruch 1, wobei Datenübertragung von der Benutzerschnittstelle (106) zu dem Cursorsteuermittel (110) eine Zeitbasis in Termen sich wiederholender Ereignisse erfordert, und wobei das Cursorsteuermittel oder die Benutzerschnittstelle das vorbestimmte Zeitintervall in Termen der Anzahl Ereignisse misst.

4. System nach Anspruch 3, wobei ein Ereignis der betreffenden sich wiederholenden Ereignisse eine betreffende Aktualisierung einer Cursorposition erfordert und wobei die relativ niedrige Geschwindigkeit durch eine relativ kurze Verlagerung des Cursors je Aktualisierung und wobei die relativ hohe Geschwindigkeit durch eine relativ große Verlagerung des Cursors je Aktualisierung herbeigeführt wird.

5. System nach Anspruch 1, wobei das Benutzerschnittsellenmittel (106) wenigstens die relativ niedrige Geschwindigkeit (v1) oder die relativ hohe Geschwindigkeit (v2) variabel macht in Reaktion auf eine Manipulation der Benutzerschnittstelle durch diesen Benutzer.

6. System nach Anspruch 3, wobei das Cursorsteuermittel (110) oder das Benutzerschnittstellemittel (106) mit einem rückstellbaren Zählmittel (440) versehen ist zum Zählen der Anzahl Ereignisse, die seit der letzten Betätigung stattgefunden haben.

7. System nach Anspruch 1 oder 3, mit einem CD-I-System.

8. Benutzerschnittstelle zum Gebrauch in dem System nach Anspruch 2, 5 oder 6.

## Revendications

1. Système de traitement de données comprenant :
- un écran (102);
- un moyen de commande du curseur (110) connecté à l'affichage pour le déplacement d'un curseur représenté sur l'affichage;
- un moyen d'interface utilisateur (106) couplé au moyen de commande du curseur pour la manipulation du curseur par l'utilisateur par l'entremise du moyen de commande du curseur;
caractérisé en ce que :
- le moyen d'interface utilisateur comprend des moyens (402, 404, 406, 408) actionnés par l'utilisateur pour faire varier la vitesse dudit déplacement dans une plage de vitesses qui est limitée par une limite de vitesse supérieure (v1, v2),
- le moyen de commande du curseur est à même de régler la limite de vitesse supérieure à une vitesse relativement faible par rapport à l'affichage pendant un intervalle de temps prédéterminé (t1, t2) lors de l'activation de l'interface utilisateur et pour régler la limite de vitesse supérieure à une vitesse relativement élevée après écoulement de l'intervalle de temps prédéterminé.

2. Système selon la revendication 1, dans lequel le moyen d'interface utilisateur (106) est à même de commander le moyen de commande du curseur (110) en transmettant des données produisant la vitesse relativement faible (v1) au moyen de commande du curseur pendant un intervalle de temps prédéterminé (t1) et en transmettant des données produisant la vitesse relativement élevée (v2) au moyen de commande du curseur après écoulement de l'intervalle de temps prédéterminé.

3. Système selon la revendication 1, dans lequel la transmission de données de l'interface utilisateur (106) au moyen de commande du curseur (110) implique une base temporelle en termes d'événements répétitifs et dans lequel le moyen de commande du curseur ou l'interface utilisateur est à même de mesurer l'intervalle de temps prédéterminé en termes de nombre d'événements.

4. Système selon la revendication 3, dans lequel l'un des événements répétitifs implique une mise à jour respective d'une position du curseur, et dans lequel la vitesse relativement faible est produite par un déplacement relativement court du curseur par mise à jour et dans lequel la vitesse relativement élevée est produite par un déplacement relativement grand du curseur par mise à jour.

5. Système selon la revendication 1, dans lequel le moyen d'interface utilisateur (106) est à même de faire varier au moins la vitesse relativement faible (v1) ou la vitesse relativement élevée (v2) en réponse à la manipulation de l'interface utilisateur par l'utilisateur.

6. Système selon la revendication 3, dans lequel le moyen de commande du curseur (110) ou le moyen d'interface utilisateur (106) est pourvu d'un moyen de comptage qu'on peut remettre à zéro (440) pour compter le nombre d'événements qui se sont produits depuis la dernière activation de l'interface utilisateur.

7. Système selon la revendication 1 ou 3, comprenant un système à CD-I.

8. Moyen d'interface utilisateur adaptée à une utilisation dans le système de la revendication 2, 5 ou 6.
